Europäisches Patentamt

European Patent Office

Office européen des brevets

(11) Veröffentlichungsnummer : **0 022 487**
**B1**

(12) **EUROPÄISCHE PATENTSCHRIFT**

(45) Veröffentlichungstag der Patentschrift :
05.10.83

(51) Int. Cl.³ : **G 11 B   5/70**, G 11 B   5/84

(21) Anmeldenummer : **80103505.6**

(22) Anmeldetag : **23.06.80**

(54) **Magnetischer Aufzeichnungsträger.**

(30) Priorität : **12.07.79 DE 2928096**

(43) Veröffentlichungstag der Anmeldung :
**21.01.81 Patentblatt 81/03**

(45) Bekanntmachung des Hinweises auf die Patenterteilung : **05.10.83 Patentblatt 83/40**

(84) Benannte Vertragsstaaten :
**DE FR GB**

(56) Entgegenhaltungen :
**AT B 224 357**
**DE A 2 304 311**
**DE A 2 357 517**
**DE B 1 190 985**

**Patents Abstracts of Japan Band 3, Nr. 31, 16. März 1979, Seite 43E98**

**Patents Abstracts of Japan Band 1, Nr. 73, 14. Juli 1977, Seite 946E77**

(73) Patentinhaber : **BASF Aktiengesellschaft**
**Carl-Bosch-Strasse 38**
**D-6700 Ludwigshafen (DE)**

(72) Erfinder : **Fellelsen, Peter**
**Sedanstrasse 21**
**D-6840 Lampertheim (DE)**
Erfinder : **Mayer, Dieter, Dr.**
**Berner Weg 28**
**D-6700 Ludwigshafen (DE)**
Erfinder : **Koester, Eberhard, Dr.**
**Max-Slevogt-Strasse 23**
**D-6710 Frankenthal (DE)**
Erfinder : **Domas, Friedrich**
**Hauptstrasse 102**
**D-6831 Altlussheim (DE)**
Erfinder : **Deigner, Paul, Dr.**
**In der Leimengrube 7**
**D-7601 Willstaett (DE)**

## Magnetischer Aufzeichnungsträger

Die Erfindung betrifft magnetische Aufzeichnungsträger aus einem unmagnetischen scheibenförmigen Trägermaterial, auf dem ein- oder beidseitig jeweils mindestens zwei magnetisierbare Schichten haftfest aufgebracht sind.

Es ist bekannt, Informationen, vor allem auf dem Gebiet der Datenverarbeitung, auf scheibenförmigen starren oder flexiblen magnetischen Aufzeichnungsträgern in konzentrischen Aufzeichnungsspuren zu speichern.

Die Herstellung dieser scheibenförmigen Aufzeichnungsträger geschieht in üblicher Weise durch Auftragen einer Dispersion eines feinteiligen, anisotropen magnetischen Materials, wie z. B. nadelförmigem Gamma-Eisen(III)oxid, zusammen mit geeigneten Zusatzstoffen in einer Lösung eines organischen Bindemittels auf das Trägermaterial. Im Falle der starren Magnetspeicherplatten wird die Dispersion meist nach dem sogenannten spin-coating-Verfahren (US-PS 3 198 657) auf Aluminiumscheiben aufgetragen, während die entsprechenden flexiblen Speichermedien aus einer auf der Dispersion beschichteten Folienbahn ausgestanzt werden. Bei diesen Aufzeichnungsträgern sind die anisotropen magnetischen Teilchen entweder nicht oder aber zirkular ausgerichtet (DE-OS 23 04 311).

Wie allgemein bekannt, wird durch eine Orientierung der anisotropen magnetischen Teilchen in der Speicherschicht die remanente Magnetisierung in die Vorzugsrichtung erhöht. Diese Maßnahme wird üblicherweise bei bandförmigen Aufzeichnungsträgern dadurch genutzt, daß die Ausrichtung entlang der vorgesehenen Aufzeichnungsrichtung erfolgt, wodurch ein höherer Ausgangspegel für die aufgezeichnete Information erreicht wird. Bei gleicher Schichthöhe von ungerichteter zu gerichteter Aufzeichnungsschicht verschlechtert sich jedoch das Verhältnis der Aufzeichnungsempfindlichkeit zwischen tiefen und hohen Frequenzen, d. h. zwischen geringer und hoher Aufzeichnungsdichte. Dieser Effekt kann nun dadurch ausgeglichen werden, daß die Schichtstärke verringert wird. Auch ist schon mehrfach vorgeschlagen worden, innerhalb einer magnetischen Schicht die anisotropen Teilchen derart auszurichten, daß ihre leichte Achse weitgehend parallel zu dem Feldverlauf vor dem Aufzeichnungskopf ist (US-PS 3 185 775, US-PS 3 052 657, AT-PS 224 357). Dies bedeutet, daß die Teilchen in dem Magnetkopf-fernen Schichtbereichen in Aufzeichnungsrichtung und parallel zur Schichtebene orientiert sind, während die Teilchen an der Schichtoberfläche nahezu senkrecht zur Schichtebene und damit parallel zu den aus dem Magnetkopf austretenden Feldlinien sind. Damit konnte bei analoger Aufzeichnung, insbesondere auf dem Audiogebiet, der Frequenzbereich der magnetischen Aufzeichnungsträger beachtlich erweitert werden. Auf den Verlust des durch die Orientierung der magnetischen Teilchen möglichen Anstiegs des Ausgangspegels konnte dabei unschwer verzichtet werden.

Solche Überlegungen gelten jedoch für die Aufzeichnung digitaler Information nicht uneingeschränkt. Eine Absenkung des Ausgangspegels ist bereits unerwünscht, erfolgt sie durch eine Schichtdickenverringerung, tritt üblicherweise eine merkliche Anhebung der Schichtfehler ein. Außerdem lassen sich bei dünnen Schichten die Oberflächen nur schwer in der bei scheibenförmigen Aufzeichnungsträgern üblichen Weise zur Erzielung der erforderlichen Ebenheit und Rauhigkeit bearbeiten, ohne daß Schichtfehler auftreten. Auf der anderen Seite hat eine nicht ausgerichtete Magnetschicht bei gleicher Dicke den Vorteil des sehr günstigen Frequenzverhaltens. Nachteilig ist jedoch das sehr geringe Lesesignal, daß das Signal/Rauschverhältnis um etwa den Faktor 2 verschlechtert. Dies bedeutet wiederum, daß das Fehlerverhalten schlechter wird, da durch die Rauschpulse Phasenfehler im Lesesignal entstehen. Besonders kritisch ist dies auf den innersten Spuren eines scheibenförmigen magnetischen Aufzeichnungsträgers, wo die Aufzeichnungsdichte am höchsten und die Relativgeschwindigkeit zwischen Kopf und Platte am geringsten ist, d. h. das Lese-Signal, und besonders das mit der hohen Frequenz, am niedrigsten ist.

Aufgabe der Erfindung war es daher, scheibenförmige magnetische Aufzeichnungsträger unter Vermeidung der geschilderten Nachteile bereitzustellen, welche insbesondere sowohl ein hohes sogenanntes 2F-Lesesignal, das ist die höchste Frequenz bei FM- und MFM-Codierverfahren, als auch eine hohe Auflösung, d. h. ein hohes Verhältnis von 2F- zu 1F-Signal, bei einer relativ dicken Magnetschicht aufweisen.

Diese Aufgabe wird nach der Erfindung dadurch gelöst, daß die unmittelbar auf dem Trägermaterial befindliche Schicht magnetisch isotrop ist und die zweite Schicht sowie gegebenenfalls alle weiteren, eine Achse leichter Magnetisierung in der Ebene der Schicht und parallel zur vorgesehenen Aufzeichnungsrichtung aufweisen.

Insbesondere sind solche magnetische Aufzeichnungsträger Gegenstand der Erfindung, welche magnetisierbare Schichten auf der Basis von in einem polymeren Bindemittel und üblichen Zusatzstoffen feinverteilten anisotropen magnetischen Material besitzen, wobei die unmittelbar auf dem Trägermaterial befindliche Schicht magnetisch isotrop ist, d. h. die anisotropen magnetischen Teilchen sind weitgehend statistisch verteilt, so daß keine magnetische Vorzugsrichtung existiert, während die oberen magnetisierbaren Schichten die magnetischen Teilchen in einer zirkularen Vorzugsrichtung, d. h. parallel zur vorgesehenen Aufzeichnungsrichtung enthalten und der Grad der Ausrichtung der oberen Schichten in die magnetische Vorzugsrichtung von Schicht zu Schicht ansteigt.

Als besonders zweckmäßig hat es sich im Rahmen der Erfindung herausgestellt, wenn auf beiden Seiten des scheibenförmigen Aufzeichnungsträgers zwei magnetisierbare Schichten vorhanden sind.

Mit dem erfindungsgemäßen Aufzeichnungsträger wird auf einfache Weise erreicht, daß für die hohen Frequenzen, zu deren Aufzeichnung nur die oberen Bereiche einer magnetisierbaren Schicht beitragen, Teilschichten mit einer magnetischen Vorzugsrichtung in Aufzeichnungsrichtung zu Verfügung stehen und somit die verbleibende remanente Magnetisierung im Vergleich zu einer ungerichteten Schicht höher ist. Die tiefen Frequenzen der aufgezeichneten Information werden vorzugsweise in den weiter vom Magnetkopf entfernten Ebenen der magnetisierbaren Schicht gespeichert, die, da ohne magnetische Vorzugsrichtung, weniger zum späteren Lesepegel beitragen. Dies bedeutet ein höheres Verhältnis von hohen zu tiefen Frequenzen, d. h. eine bessere Auflösung der gespeicherten Information mit dem erfindungsgemäßen Aufzeichnungsträger und damit trotz einer für das Fehlerverhalten und die erforderliche Oberflächenbearbeitbarkeit vorteilhaften dickeren Gesamtschicht ein gutes Frequenzverhalten. Dies wirkt sich vor allem auf den innersten konzentrischen Aufzeichnungsspuren von scheibenförmigen Aufzeichnungsträgern günstig aus, da dort die Relativgeschwindigkeit zwischen Magnetkopf und Aufzeichnungsmedien am geringsten und somit die Aufzeichnungsdichte am höchsten ist. Auf diesen Aufzeichnungsspuren war nach dem Stand der Technik das Lesesignal, vor allem das mit hoher Frequenzen, am niedrigsten.

Die Aufzeichnung digitaler Daten erfolgt üblicherweise als Wechseltaktschrift FM (auch 2-Frequenzverfahren) oder modifizierter Wechseltaktschrift MFM (auch 3-Frequenzverfahren). Bei der Wechseltaktschrift ist die Lage eines Flußwechsels in einer Bitzelle, die von der Aufzeichnung selbst generiert wird, einem der beiden Binärzeichen Null und Eins zugeordnet. Ein Flußwechsel am Anfang einer Bitzelle, genannt Taktflußwechsel, entspricht einem Null-Bit, ein zusätzlicher Flußwechsel in der Mitte der Bitzelle, genannt Datenflußwechsel, einem Eins-Bit. Der Name 2-Frequenzverfahren rührt von der Tatsache her, daß bei diesem Verfahren 2 Frequenzen vorkommen können, einmal bei einer Kette von Null-Bits die Frequenz 1F, bei einer Kette von Eins-Bits die doppelte Frequenz 2F.

Bei der modifizierten Wechseltaktschrift beginnt bei einer Kette von Null-Bits jede Bitzelle mit einem Taktflußwechsel. Bei einer Kette von Eins-Bits jedoch entfallen die Taktflußwechsel zu Beginn einer Bitzelle und es werden nur Datenflußwechsel in die Mitte jeder Bitzelle geschrieben. In beiden Fällen entsteht also die gleiche Frequenz 2F. Da jedoch nur ein Taktflußwechsel geschrieben wird, wenn zwei Null-Bits aufeinander folgen, der Taktflußwechsel jedoch unterbleibt, wenn ein Eins-Bit dem Null-Bit folgt, entsteht die Frequenz 1F bei der alternierenden Folge von Null- und Eins-Bits, bei der nur Datenflußwechsel mit der Frequenz 1F vorkommen. Die dritte Frequenz 1,5F entsteht, wenn einem Eins-Bit zwei Null-Bits folgen und dies in Folge fortgesetzt wird.

Die Herstellung der erfindungsgemäßen Aufzeichnungsträger erfolgt in an sich bekannter Weise. Der angestrebte Erfolg läßt sich sowohl bei flexiblen als auch bei starren scheibenförmigen Aufzeichnungsträgern, d. h. bei Datenscheiben in der als « diskette » bezeichneten Art als auch bei den Magnetspeicherplatten, den sogenannten « disks », erreichen. Die Besonderheiten bei der Herstellung der genannten Aufzeichnungsträger sind bekannt.

Magnetspeicherplatten in diesem Sinne bestehen aus dem Trägermaterial, einer aus einer Aluminiumlegierung bestehenden kreisförmigen Scheibe mit einer in der Mitte konzentrisch angeordneten Ausnehmung. Auf diese Scheibe mit ihren geschliffenen und geläppten Oberflächen wird nun die Magnetschicht aufgebracht. Dies gescheiht durch Auftragen einer Dispersion eines magnetischen Materials, meist nadelförmiges Gamma-Eisen(III)oxid, mit einer durchschnittlichen Teilchenlänge von 0,1 bis 2 μm, in einem härtbaren, organischen Bindemittel. Als Bindemittel, die zweckmäßig in Form ihrer Lösungen bzw. der Lösungen ihrer Komponenten angewandt werden, sind Bindemittel mit reaktiven Epoxygruppen besonders geeignet. Sehr geeignet sind die Polyglycidyläther von aliphatischen und aromatischen Polyolen, wie Glycerin, 1,4-Butandiol, Tris(hydroxymethyl)-propan-(2,2), Pentaerythrit, Bisphenol A, (Bis-(4-hydroxyphenyl)-propan-(2,2)), Bis-(4-hydroxyphenyl)-methan und ähnliche, die durch Umsetzung der Polyole mit Epichlorhydrin gewonnen werden können und als Lackbindemittel in Handel erhältlich sind. Sie lassen sich z. B. mit Polyaminen, Polyaminoamiden, härten, gegebenenfalls plastizierten Phenoplasten vom Resoltyp, härtbaren Harnstoff-Formaldehydvorkondensaten oder härtbaren Melamin-Formaldehydvorkondensaten, deren Methylolgruppen auch mit niederen Alkoholen veräthert sein können, bei höheren Temperaturen härten. Natürlich können die Schichten auch die üblichen Zusatzstoffe, z. B. Dispergierhilfsmittel oder Gleitmittel, in den üblichen kleinen Mengen enthalten. Zur Herstellung der Dispersion wird das Gemisch aus magnetischem Material mit dem härtbaren Bindemittel und genügend Lösungsmittel nach einem üblichen Dispergierverfahren, z. B. in einer Kugelmühle, dispergiert. Auch das Auftragen der Dispersion auf die Trägerscheibe kann in bekannter Weise erfolgen. Als sehr zweckmäßig hat sich erwiesen, zunächst eine Schicht der Dispersion auf die langsam rotierenden Trägerscheiben, z. B. bei einer Geschwindigkeit von etwa 100 bis 500 U/min, aufzutragen, und danach die gewünschte Schichtstärke durch Rotation der Scheibe bei höherer Geschwindigkeit, bevorzugt bei etwa 1 000 bis

3 000 U/min, einzustellen. Eine mögliche Auftragstechnik ist in der US-PS 2 913 246 beschrieben. In der üblichen Ausführungsform werden die Trägerplatten beidseitig mit der Magnetschicht versehen. Danach werden in einer ersten Stufe die Dispersionsschichten durch Verdampfen des Lösungsmittels getrocknet. In gleicher Weise werden danach die zweite und gegebenenfalls alle weiteren Schichten aufgetragen. Dies geschieht jedoch mit der Ausnahme, daß die magnetischen Teilchen in an sich bekannter Weise beim Auftrag der Dispersion mit Hilfe eines Magnetfeldes zirkular orientiert werden. Verfahren dieser Art sind beispielsweise in der DE-OS 2 357 517 oder auch in der US-PS 4 001 463 beschrieben. Anschließend wird das Bindemittel der magnetischen Schicht bei erhöhter Temperatur ausgehärtet. Die Oberflächen der so hergestellten Magnetbeschichtung werden zweckmäßigerweise durch Schleifen und Polieren auf die erforderliche Oberflächenrauhigkeit gebracht.

Die erfindungsgemäßen Aufzeichnungsträger können anstelle magnetisierbarer Schichten auf der Basis von in organischen Bindemitteln feinverteilten magnetischen Magnetteilchen auch ferromagnetische Metallschichten aufweisen.

Die Herstellung derartiger Schichten ist allgemein bekannt (z. B. DE-OS 25 12 456), ebenso die Herstellung entsprechender Schichten mit einer magnetischen Vorzugsrichtung (z. B. DE-OS 19 52 627).

Bei der Fertigung der flexiblen scheibenförmigen Aufzeichnungsträger in der als « diskette » bezeichneten Art wird von der üblichen Herstellweise abgewichen. Sie werden nicht durch Ausstanzen aus einer mit einer Magnetschicht versehenen Folienbahn, sondern durch das bei den starren Aufzeichnungsplatten bekannte spin-coating-Verfahren erhalten. Dazu werden zunächst unbeschichtete Folienscheiben gefertigt, die dann, wie oben beschrieben, im Schleuderverfahren unter Anpassung der Verfahrensparameter an Art und Abmessung der Folienscheibe beschichtet werden.

Die Erfindung sei anhand folgender Beispiele und Vergleichsversuche erläutert.

Beispiel 1

In einer mit 18 000 Teilen Steatitkugeln gefüllten Porzellankugelmühle von 30 000 Volumenteilen Inhalt wird eine Mischung von 35 000 Teilen stäbchenförmigen Gamma-Eisen(III)oxid mit einer durchschnittlichen Teilchengröße von 0,2 bis 1 μm, 4 200 Teilen einer 50 %igen Lösung eines handelsüblichen Polykondensates aus 2,2-(Hydroxyphenyl)-propan und Epichlorhydrin mit einem Schmelzpunkt von etwa 125 bis 135 °C und einem Epoxäquivalentgewicht von etwa 1 900 bis 2 500 in einem Gemisch aus 70 % Cyclohexanol und 30 % Xylol, 85 Teile eines handelsüblichen Polysiloxans in Lösung, 3 000 Teile Toluol und 260 Teile Anon 40 Stunden vordispergiert. Nach Zugabe von 700 Teilen eines handelsüblichen, härtbaren Allyloxibenzol-Formaldehyd-Kondensates mit einem Molekulargewicht von etwa 320, 640 Teile eines Melaminformaldehydkondensats in Form einer 55 %igen Lösung in gleichen Teilen n-Butanol und Xylol, 500 Teile einer 70 %igen toluolischen Lösung von Polyvinylmethyläther und 6 000 Teilen eines Gemisches aus gleichen Teilen von Anon, Toluol und Butyrolacton wird die Mischung weitere 15 Stunden dispergiert. Kurz vor Beendigung der Dispergierung werden noch 660 Teile Elektrokorundpaste zugemischt und die Dispersion durch ein 5 μm Papierfilter filtriert.

Zur Herstellung der Magnetschicht wird die Dispersion nach dem in der DE-PS 21 57 650 angegebenen Verfahren beidseitig auf zuvor gereinigte, in Schrägstellung rotierende Aluminiumscheiben aufgetragen. Durch Erhöhen der Umdrehungszahl der Scheibe wird die überschüssige Magnetdispersion abgeschleudert und man erhält einen homogenen, strukturfreien Überzug auf beiden Seiten der Trägerplatte. Nach dem Verflüchtigen des Lösungsmittels und Verfestigen der Schicht wird eine weitere Magnetschicht in gleicher Weise aufgetragen, jedoch wird hier bei der Bildung der gleichmäßigen Dispersionsschicht nach der in der US-PS 4 001 463 geschilderten Verfahrensweise ein konzentrisches Magnetfeld angelegt. Durch diese Orientierung der nadelförmigen Gamma-Eisen(III)oxidteilchen ergibt sich eine konzentrische magnetische Vorzugsrichtung.

Beide Teilschichten haben eine Dicke von je 3 μm, d. h. die Gesamtdicke der Schicht ist 6 μm. Die Messung der magnetischen Vorzugsrichtung, das ist das Verhältnis der remanenten Magnetisierung längs zur Aufzeichnungsrichtung zu der genannten Magnetisierung quer dazu, ergibt für die Oberschicht 2,5, während die Unterschicht magnetisch isotrop ist.

Beispiel 2 bis 5

In der in Beispiel 1 beschriebenen Weise werden Magnetspeicherplatten mit einer ungerichteten Unterschicht und einer gerichteten Oberschicht mit einer Gesamtdicke d von 1, 2, 3 und 4 μm, entsprechend Beispiel 2, 3, 4 und 5 hergestellt.

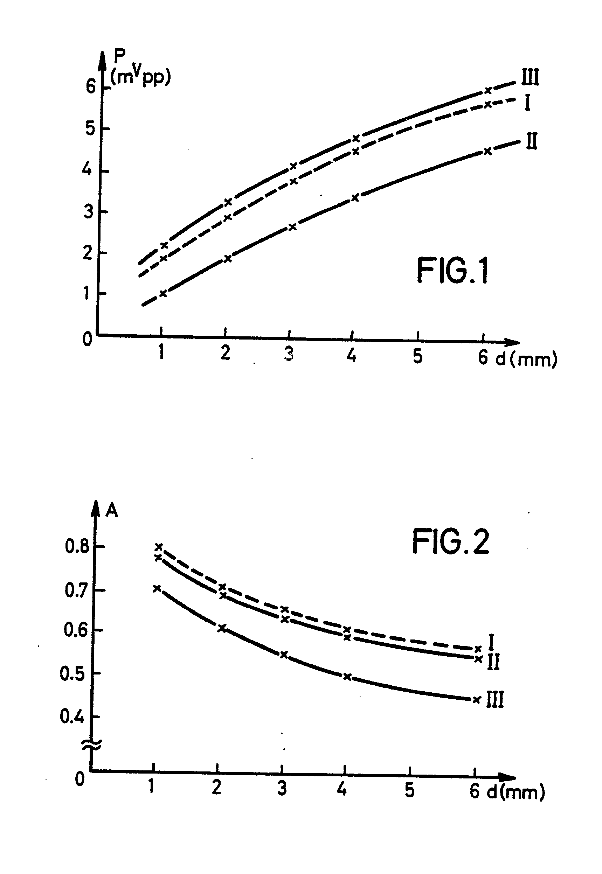

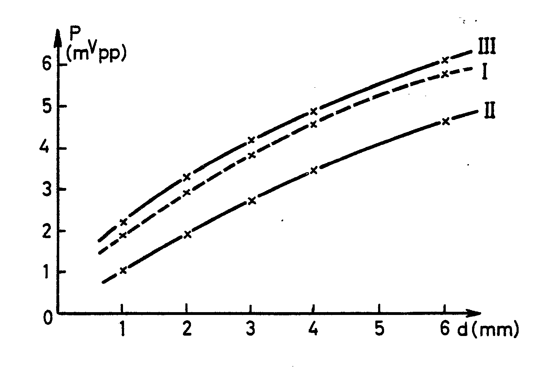

Auf diese Magnetspeicherplatte der Beispiele 1 bis 5 werden Flußwechsel mit einer Frequenz von $2,4 \cdot 10^6$ Flußwechsel pro Sekunde (1F-Signal) und von $4,8 \cdot 10^6$ Flußwechsel pro Sekunde (2F-Signal) aufgezeichnet. Die Magnetspeicherplatte rotiert dabei auf 3 600 Upm. Auf einer Aufzeichnungsspur mit dem Radius von 165 mm wird der Pegel P des 2F-Lesesignals und die Auflösung A, d. h. das Verhältnis des 2F-Lesesignalpegels zum 1F-Lesesignalpegel, bestimmt. Die Meßwerte sind in Figur 1 und 2 mit der Kurve I dargestellt.

Vergleichsversuche 1 bis 5

Nach dem in Beispiel 1 beschriebenen Verfahren werden Magnetspeicherplatten mit jedoch nur einer ungerichteten Magnetschicht und den entsprechenden Schichtdicken von 1, 2, 3, 4 und 6 µm hergestellt.

An diesen Magnetspeicherplatten werden ebenfalls die Werte von P und A bestimmt. Die Ergebnisse sind in den Figuren 1 und 2 durch die Kurve II wiedergegeben.

Vergleichsversuche 6 bis 10

Wie in Beispiel 1 beschrieben werden Magnetspeicherplatten hergestellt, jedoch wird hier eine Magnetschicht aufgebracht und diese, wie ebenfalls ausgeführt, magnetisch ausgerichtet. Die Schichtdicke der einzelnen Magnetspeicherplatten sind ebenfalls 1, 2, 3, 4 und 6 µm. Durch Anpassen des auf die noch fließfähige Magnetschicht einwirkenden Magnetfeldes, wird jeweils eine magnetische Vorzugsrichtung von 2,5 erreicht.

An diesen Magnetspeicherplatten werden in der beschriebenen Weise die Werte von P und A bestimmt. Die Ergebnisse sind in den Figuren 1 und 2 durch die Kurve III wiedergegeben.

**Ansprüche**

1. Magnetischer Aufzeichnungsträger aus einem unmagnetischen scheibenförmigen Trägermaterial, auf dem ein- oder beidseitig jeweils mindestens zwei magnetisierbare Schichten haftfest aufgebracht sind, dadurch gekennzeichnet, daß die unmittelbar auf dem Trägermaterial befindliche Schicht magnetisch isotrop ist und die zweite Schicht sowie gegebenenfalls alle weiteren, eine Achse leichter Magnetisierung in der Ebene der Schicht und parallel zur vorgesehenen Aufzeichnungsrichtung aufweisen.

2. Magnetischer Aufzeichnungsträger nach Anspruch 1, dadurch gekennzeichnet, daß die magnetisierbaren Schichten aus in einem polymeren Bindemittel und üblichen Zusatzstoffen feinverteilten anisotropen magnetischen Material bestehen, daß auf der isotropen Schicht mindestens zwei weitere magnetisierbare Schichten vorhanden sind, die die magnetischen Teilchen in einer zirkularen Vorzugsrichtung in der Schichtebene enthalten und daß der Grad der Ausrichtung der weiteren Schichten in die magnetische Vorzugsrichtung von Schicht zu Schicht ansteigt.

3. Magnetischer Aufzeichnungsträger nach Anspruch 1, dadurch gekennzeichnet, daß beidseitig auf dem Trägermaterial zwei magnetisierbare Schichten auf der Basis eines in einem polymeren Bindemittel und üblichen Zusatzstoffen feinverteilten anisotropen magnetischen Materials haftfest aufgebracht sind.

**Claims**

1. A magnetic recording medium comprising a non-magnetic disc-shaped substrate and at least two firmly adhering magnetizable layers applied to one or both sides thereof, wherein the layer located directly on the substrate is magnetically isotropic, and the easy axis of magnetization of the magnetic particles in the second layer and any additional layers is in the plane of the layer and parallel to the envisaged recording direction.

2. A magnetic recording medium as claimed in claim 1, wherein the magnetizable layers consist of an anisotropic magnetic material finely dispersed in a polymeric binder which also contains conventional additives, at least two further magnetizable layers, which exhibit circular orientation of the magnetic particles in the plane of the layer, are present on the isotropic layer, and the orientation ratio of the further layers improves upwardly from layer to layer.

3. A magnetic recording medium as claimed in claim 1, wherein two firmly adhering magnetizable layers, consisting of an anisotropic magnetic material finely dispersed in a polymeric binder which also contains conventional additives, are applied to each side of the substrate.

**Revendications**

1. Support d'enregistrement magnétique constitué d'un matériau support en forme de disque, non magnétique, sur lequel sont appliquées, avec forte adhérence, sur une face ou sur les deux, au moins deux couches magnétisables, caractérisé par le fait que la couche qui se trouve directement sur la matière support est magnétiquement isotrope et la seconde couche, ainsi qu'éventuellement toutes les autres, possèdent un axe de plus faible magnétisation dans le plan de la couche et parallèle à la direction d'enregistrement prévue.

2. Support d'enregistrement magnétique selon la revendication 1, caractérisé par le fait que les couches non magnétisables sont constituées par un matériau magnétique anisotrope, finement réparti dans un liant polymère, et des additifs usuels, que, sur la couche isotrope, sont prévues au moins deux autres couches magnétisables qui contiennent les particules magnétiques en une direction d'orientation circulaire dans le plan de la couche et que le degré d'alignement des autres couches, dans la direction d'orientation magnétique, augmente d'une couche à l'autre.

3. Support d'enregistrement magnétique selon la revendication 1, caractérisé par le fait que, sur le matériau support, sont appliquées des deux côtés, avec forte adhérence, deux couches magnétisables à base d'un matériau magnétique anisotrope, finement réparti dans un liant polymère, et des additifs usuels.

FIG.1

FIG.2